# EUROPÄISCHE PATENTANMELDUNG

(11) **EP 4 607 777 A1**
(43) Veröffentlichungstag der Anmeldung: **27.08.2025**
(21) Anmeldenummer: 24158953.0
(22) Anmeldetag: 21.02.2024
(51) Int. Cl.: H02M 1/00, H02M 7/493, H02M 1/15

(54) **VERFAHREN ZUM EINSPEISEN ELEKTRISCHER LEISTUNG IN EIN ELEKTRISCHES NETZ MITTELS EINES WECHSELRICHTERS MIT MEHREREN PARALLELGESCHALTETEN TEILWECHSELRICHTERN**

(71) Anmelder: Wobben Properties GmbH, 26607 Aurich (DE); Technische Universität Ilmenau, 98693 Ilmenau (DE)
(72) Erfinder: Gensior, Albrecht, 01277 Dresden (DE)
(74) Vertreter: Eisenführ Speiser

(57) **Zusammenfassung**

Die Erfindung betrifft ein Verfahren zum Einspeisen elektrischer Leistung in ein elektrisches Netz oder zum Ansteuern einer elektrischen Maschine mittels eines Wechselrichters, und der Wechselrichter umfasst mehrere parallelgeschaltete Teilwechselrichter mit jeweils einem Gleichspannungszwischenkreis als Teilzwischenkreis des jeweiligen Teilwechselrichters, wobei jeder Teilzwischenkreis eine Teilzwischenkreisspannung aufweist, die Teilzwischenkreise zueinander parallelgeschaltet sind, jeder Teilwechselrichter mittels eines Toleranzbandverfahrens einen Teileinspeisestrom erzeugt, jeweils mit einem oder mehreren Teilphasenströmen, die Teileinspeiseströme der mehreren Teilwechselrichter zu einem Gesamteinspeisestrom addiert werden, zum Erzeugen jedes Teilphasenstroms jeweils ein Toleranzband vorgegeben wird, und in jedem Teilwechselrichter das Toleranzband jedes Teilphasenstroms in Abhängigkeit von der Teilzwischenkreisspannung dieses Teilwechselrichters vorgegeben wird.

## Beschreibung

Die vorliegende Erfindung betrifft ein Verfahren zum Einspeisen elektrischer Leistung in ein elektrisches Netzwerk oder zum Ansteuern einer elektrischen Maschine mittels eines Wechselrichters, der mehrere parallelgeschaltete Teilwechselrichter mit jeweils einem Gleichspannungszwischenkreis aufweist. Außerdem betrifft die vorliegende Erfindung einen entsprechenden Wechselrichter. Die Erfindung betrifft auch eine Windenergieanlage, die ein entsprechendes Verfahren verwendet und/oder einen entsprechenden Wechselrichter aufweist.

Besonders, aber nicht ausschließlich, verwenden viele Windenergieanlagen zum Einspeisen elektrischer Leistung in ein elektrisches Versorgungsnetz, oder anderes elektrisches Netz, Wechselrichter. Insbesondere geht es hierbei um ein Konzept, bei dem sämtliche einzuspeisende Leistung von dem Wechselrichter eingespeist wird. Besonders bei Windenergieanlagen hat es sich bewährt, für unterschiedlich große Windenergieanlagen, die also unterschiedlich viel Leistung einspeisen können, den gleichen Wechselrichtertyp zu verwenden. An die unterschiedlich große einzuspeisende Leistung kann der Wechselrichter dadurch angepasst werden, dass unterschiedlich viele Teilwechselrichter parallelgeschaltet werden. Dadurch ist es möglich, dass für unterschiedlich große Einspeiseleistungen immer die gleichen Teilwechselrichter verwendet werden können, lediglich unterschiedlich viele Teilwechselrichter werden je nach einzuspeisender Leistung verwendet.

Ein bekanntes Verfahren, das auf solchen parallelgeschalteten Teilwechselrichtern implementiert sein kann, um einen sinusförmig einzuspeisenden Strom zu generieren, ist das Toleranzbandverfahren. Hierbei gibt jeder Teilwechselrichter für jeden einzuspeisenden Phasenstrom ein Toleranzband vor und schaltet entsprechende Halbleiterschalter, je nachdem, ob der resultierende Strom an eine Grenze seines Toleranzbandes stößt.

Auf diese Art und Weise kann jeder Teilwechselrichter eigenständig arbeiten, also eigenständig seinen einzuspeisenden Strom erzeugen, während die Teilwechselrichter aber über einen gemeinsamen Gleichspannungszwischenkreis gespeist werden. Dadurch, dass die Teilwechselrichterje Phase ausgangsseitig zusammengeschaltet sind, um ihre erzeugten sinusförmigen Ströme zu überlagern, können somit durch diese Zusammenschaltung und den gemeinsamen Gleichspannungszwischenkreis Ausgleichsströme auftreten, wenn die Teilwechselrichter nicht ideal synchron arbeiten und/oder nicht ideal identisch sind. Es reichen bereits kleine Unterschiede, die z.B. thermisch bedingt sein können, dass Ausgleichsströme fließen können.

Besonders wird eine Konfiguration betrachtet, die aus parallel kaskadierten Stromrichtern besteht, deren Zwischenkreise galvanisch verbunden sind. Ein sinnvoller Betrieb besteht darin, die Schaltsignale der Stromrichter zeitlich zu versetzen, um die Welligkeit des resultierenden Stroms, also der Summe der Einzelströme jeder Phase, gering zu halten. Bereits durch die Welligkeit der Einzelströme können sich unterschiedliche Energieerträge in die Zwischenkreiskondensatoren ergeben, was zu unerwünschten Ausgleichsströmen über die impedanzbehaftete Verbindung zwischen den Stromrichtern führt. Die genannten Teilwechselrichter können hier synonym auch als Stromrichter bezeichnet werden.

Besonders wurde erkannt, dass bei geringer Dämpfung Schwingungsvorgänge angeregt werden können. Ein solches Phänomen ist besonders dann ausgeprägt, wenn Folienkondensatoren zum Einsatz kommen, einerseits, weil die Kapazität dann relativ gering und die Spannungsunterschiede entsprechend groß sind, andererseits, weil diese weniger natürliche Dämpfung bereitstellen als Elektrolytkondensatoren. Das Phänomen kann ebenfalls dann ausgeprägt sein, wenn spezielle schaltende Regelungsverfahren genutzt werden, bei denen kein zeitlich deterministisches Schaltverhalten zustande kommt, weil es dann zu einer breitbandigen Anregung im Zwischenkreis kommen kann.

Um das Problem zu adressieren, können Steuerverfahren verwendet werden, die zu einem zeitlich deterministischen Schaltverhalten führen. Es kann also eine Koordination der einzelnen Stromrichter bzw. Teilwechselrichter durchgeführt werden, was einen entsprechenden Koordinationsaufwand erforderlich macht, und was auch einen entsprechenden Eingriff in das implementierte Toleranzbandverfahren jedes einzelnen Teilwechselrichters erforderlich machen kann.

Es kommt auch in Betracht, die Stromwelligkeit durch passive Maßnahmen zu reduzieren. Besonders kommen hier entsprechende Filter in Betracht, die wiederum einen entsprechenden Bauteileaufwand nach sich ziehen und damit assoziierte Verluste.

Auch pauschale Reduzierungen der Stromwelligkeit durch aktive Maßnahmen kommen in Betracht, die letztlich zu mehr Schaltereignissen führen. Dazu gehört besonders, die Schaltfrequenz durch Verschmälerung des Toleranzbandes zu erhöhen.

Auch passive Maßnahmen in der Gestaltung des Gleichspannungszwischenkreises, der auch vereinfacht und synonym als Zwischenkreis bezeichnet werden kann, kommen in Betracht. Dazu gehört, zusätzliche Filterelemente vorzusehen, die Kapazität zu erhöhen und eventuell eine passive Dämpfung vorzusehen.

Die genannten Maßnahmen können zu einem höheren Materialaufwand führen und/oder zu einer höheren Schalthäufigkeit der leistungselektronischen Komponenten, also insbesondere der Halbleiterschalter und Dioden. All dies ist verlustbehaftet.

Der vorliegenden Erfindung liegt somit die Aufgabe zugrunde, zumindest eins der oben genannten Probleme zu adressieren. Insbesondere soll eine Lösung vorgeschlagen werden, Ausgleichsströme bei parallelgeschalteten Teilwechselrichtern mit möglichst geringem Aufwand und mit möglichst wenig zusätzlichen Verlusten zu reduzieren. Zumindest soll zu bisher bekannten Lösungen eine Alternative vorgeschlagen werden.

Erfindungsgemäß wird ein Verfahren nach Anspruch 1 vorgeschlagen. Das Verfahren betrifft somit das Einspeisen elektrischer Leistung in ein elektrisches Netz, insbesondere in ein elektrisches Versorgungsnetz mittels eines Wechselrichters. Es kann aber auch zum Ansteuern einer elektrischen Maschine genutzt werden, die durch einen entsprechenden Wechselstrom angesteuert wird, also insbesondere das Ansteuern des Statorstroms einer Synchronmaschine.

Der verwendete Wechselrichter umfasst mehrere parallelgeschaltete Teilwechselrichter mit jeweils einem Gleichspannungszwischenkreis, der hier als Teilzwischenkreis des jeweiligen Teilwechselrichters bezeichnet wird. Jeder Teilzwischenkreis weist eine Teilzwischenkreisspannung auf. Diese Teilzwischenkreisspannung kann auch erfasst, insbesondere gemessen werden. Die Teilzwischenkreise sind zueinander parallelgeschaltet und dennoch können sich die Teilzwischenkreisspannungen der einzelnen Teilzwischenkreise unterscheiden. Das liegt besonders daran, dass sie nicht ideal galvanisch gekoppelt sind, sondern dass die Kopplung Impedanzen aufweist, die auch als Kopplungsimpedanzen bezeichnet werden können.

Jeder Teilwechselrichter erzeugt mittels eines Toleranzbandverfahrens einen Teileinspeisestrom, der auch synonym als Teilwechselrichterstrom bezeichnet werden kann, jeweils mit einem oder mehreren Teilphasenströmen. Besonders ist vorgesehen, dass jeder Teilwechselrichter und damit auch der Wechselrichter insgesamt einen dreiphasigen Strom bereitstellt. Jeder Teileinspeisestrom bzw. Teilwechselrichterstrom weist in diesem Fall drei Teilphasenströme auf.

Ferner sind die Teilwechselrichter so verschaltet, dass die Teileinspeiseströme bzw. Teilwechselrichterströme der mehreren Teilwechselrichter zu einem Gesamteinspeisestrom bzw. Gesamtwechselrichterstrom addiert werden. Der Gesamteinspeisestrom kann also synonym als Gesamtwechselrichterstrom bezeichnet werden. Insbesondere sind die Teilwechselrichter ausgangsseitig so verschaltet, dass die jeweiligen Teilphasenströme zu einem Phasenstrom aufaddiert werden. Es ergeben sich dann beispielsweise drei Phasenströme, die zusammen den Gesamteinspeisestrom bzw. Gesamtwechselrichterstrom bilden, der also im genannten Beispiel dreiphasig ist. Die Begriffe Teilwechselrichterstrom und Gesamtwechselrichterstrom werden besonders für den Fall vorgeschlagen, wenn mit dem Wechselrichter ein elektrisches Versorgungsnetz angesteuert wird. Die Erläuterungen im Zusammenhang mit den Begriffen Teileinspeisestrom bzw. Gesamteinspeisestrom sind aber sinngemäß auch für die Ansteuerung eines Generators zu verstehen.

Außerdem wird zum Erzeugen jedes Teilphasenstroms jeweils ein Toleranzband vorgegeben und in jedem Teilwechselrichterwird das Toleranzband jedes Teilphasenstroms in Abhängigkeit von der Teilzwischenkreisspannung dieses Teilwechselrichters vorgegeben.

Jeder Teilwechselrichter erzeugt also jeden Teilphasenstrom individuell durch Vorgabe eines entsprechenden Toleranzbandes für diesen Teilphasenstrom. Die Vorgabe der Toleranzbänder ist aber nicht fest, sondern kann sich ständig an die Teilzwischenkreisspannung anpassen.

Hier liegt die Erkenntnis zugrunde, dass unterschiedliche Teilzwischenkreisspannungen der parallelgeschalteten Teilzwischenkreise vorliegen können. Sie führen zu Ausgleichsströmen, die vermieden werden sollen. Durch die Anpassung des Toleranzbandes eines Teilwechselrichters kann dem entgegengewirkt werden.

Veranschaulichend kann bei einer geringen Teilzwischenkreisspannung des betreffenden Teilwechselrichters eine Anpassung des Toleranzbandes des entsprechenden Teilphasenstroms so erfolgen, dass sich der Teilphasenstrom etwas verringert, und dadurch quasi weniger Leistung aus dem Teilzwischenkreis entnommen wird, wodurch die Teilzwischenkreisspannung dieses Teilwechselrichters bzw. dieses Teilzwischenkreises wieder ansteigen kann.

In diesem Sinne kann für alle Teilphasenströme des Teilwechselrichters verfahren werden. Ebenfalls wird auch für die übrigen Teilwechselrichter entsprechend verfahren. Dadurch kann allein durch die Anpassung der Toleranzbänder ein Angleichen der Teilzwischenkreisspannungen erreicht werden, wodurch die Ausgleichsströme reduziert, im Idealfall vermieden werden.

Besonders wird vorgeschlagen, das so durchzuführen, dass die Summe der Eingriffe über alle Phasen null ist. Dadurch kann erreicht werden, dass sich das Verfahren nicht auf die ins elektrische Versorgungsnetz, das vereinfachend und synonym auch als Netz bezeichnet werden kann, eingespeisten Ströme auswirkt.

Gemäß einem Aspekt wird vorgeschlagen, dass das Toleranzband eines Teilphasenstroms eines Teilwechselrichters in Abhängigkeit von Teilzwischenkreisspannungen anderer, aller anderen oder aller Teilwechselrichter vorgegeben wird. Es wird also in Abhängigkeit von der Teilzwischenkreisspannung dieses Teilwechselrichters und zusätzlich in Abhängigkeit von Teilzwischenkreisspannungen anderer oder aller anderen Teilwechselrichter vorgegeben. Insbesondere werden die Teilzwischenkreisspannungen aller Teilwechselrichter betrachtet, also einschließlich des aktuell betrachteten Wechselrichters. Hier liegt besonders der Gedanke zugrunde, dass es für den beschriebenen Ausgleich darauf ankommt, die Teilzwischenkreisspannungen anzugleichen. Mit anderen Worten geht es nicht darum, den jeweiligen Absolutwert der Teilzwischenkreisspannung zu berücksichtigen, sonders besonders ihre Relation in Bezug auf die anderen Teilzwischenkreisspannungen.

Gemäß einem Aspekt wird vorgeschlagen, dass jeweils für einen Teilwechselrichter eine Teilzwischenkreisspannung dieses Teilwechselrichters erfasst und in Relation gesetzt wird zu Teilzwischenkreisspannungen anderer, aller anderen oder aller Teilwechselrichter, um ein Teilzwischenkreisverhältnis für diesen einen Teilwechselrichter zu bestimmen. Dazu wird vorgeschlagen, das Toleranzband eines Teilphasenstroms dieses einen Teilwechselrichters jeweils in Abhängigkeit von dem Teilzwischenkreisverhältnis dieses Wechselrichters vorzugeben. Dadurch kann die vorbeschriebene Anpassung vorgenommen werden.

Die Teilzwischenkreisspannung eines Teilwechselrichters wird somit in Relation zu den übrigen Teilzwischenkreisspannungen, besonders zu einem Mittelwert der Teilzwischenkreisspannungen, gesetzt und davon abhängig das Toleranzband angepasst. Sie kann auch in Relation zu allen Teilzwischenkreisspannungen gesetzt werden, also einschließlich sich selbst. Besonders kann ein Quotient gebildet werden, und dieser Quotient kann beispielsweise auch 1 betragen. In diesem Fall erfolgt keine Anpassung des Toleranzbandes. Das Toleranzband wird dann also im Grunde wie üblich entsprechend dem zu erzeugenden Strom vorgegeben. Dass der exemplarisch genannte Quotient exakt 1 ist, ist aber eher unwahrscheinlich und er wird vielmehr mal größer mal kleiner 1 sein. Ist er größer 1, ist die entsprechende Teilkreiszwischenspannung quasi zu hoch und das Toleranzband kann entsprechend abgesenkt werden. Umgekehrt, ist der Quotient kleiner 1, ist die Teilkreiszwischenspannung im Grunde zu klein und das Toleranzband kann angehoben werden.

Die Relation kann auch eine Differenz sein, wie unten beschrieben wird.

Sinnvoll ist, alle Teilwechselrichter bzw. damit alle Teilzwischenkreisspannungen zu berücksichtigen, um dadurch die Teilzwischenkreisspannung des jeweiligen Teilwechselrichters in Relation zu allen Teilzwischenkreisspannungen zu setzen. Es kann aber auch sinnvoll sein, nur einige Teilzwischenkreisspannungen zu verwenden, wenn beispielsweise die Anzahl der Teilwechselrichter groß ist und der Aufwand geringgehalten werden soll. Besonders im Falle vieler Teilwechselrichter würde aus statistischen Gründen auch die Berücksichtigung nur eines Teils der Teilzwischenkreisspannungen ausreichen. Vorteilhafterweise werden aber alle Teilzwischenkreisspannungen erfasst, da dies zum Anpassen des Toleranzbandes jedes einzelnen Teilwechselrichters ohnehin erforderlich ist.

Gemäß einem Aspekt wird vorgeschlagen, dass zum Bestimmen des Teilzwischenkreisverhältnisses eines Teilwechselrichters jeweils die Teilzwischenkreisspannung dieses Teilwechselrichters in Bezug zu einem Mittelwert einiger, aller oder der übrigen Teilzwischenkreisspannungen gesetzt wird. Am effizientesten ist es, den Mittelwert aller Teilzwischenkreisspannungen zu verwenden, der also auch die Teilzwischenkreisspannung des jeweils betrachteten Teilwechselrichters mit einbezieht. Der Vorteil hiervon ist, dass dieser Mittelwert einmal für alle Teilwechselrichter gebildet werden kann. Für jeden Teilwechselrichter braucht dann nur noch seine Teilzwischenkreisspannung zu diesem Mittelwert in Bezug gesetzt zu werden.

Besonders wird vorgeschlagen, dass eine Differenz zwischen der Teilzwischenkreisspannung und dem Mittelwert als Teilzwischenkreisasymmetrie verwendet wird und das Toleranzband jeweils in Abhängigkeit von der Teilzwischenkreisasymmetrie vorgegeben wird. Die Differenz zwischen der Teilzwischenkreisspannung und dem Mittelwert wird somit als Teilzwischenkreisasymmetrie bezeichnet. Sie kann synonym auch als Teilzwischenkreisdifferenz oder individuelle Abweichung der Teilzwischenkreisspannung bezeichnet werden.

Somit wird also vorgeschlagen, keinen Quotienten zu verwenden, der weiter oben zum Zwecke der Veranschaulichung genannt wurde, sondern eine Differenz. Diese Differenz gibt dann sehr deutlich an, um wieviel die jeweilige Teilzwischenkreisspannung gegenüber dem Mittelwert zu hoch oder zu niedrig ist. Dadurch kann ein guter Indikator gefunden werden, um das jeweilige Toleranzband individuell anzupassen. Insbesondere hat diese Variante den Vorteil, dass implizit die Bedingung erfüllt wird, dass die Summe der Eingriffe null ist, weil die Summe der Abweichungen vom Mittelwert immer null ist.

Gemäß einem Aspekt wird vorgeschlagen, dass für jeden Teilphasenstrom ein Basistoleranzband in Abhängigkeit von einer vorgesehenen Stromform vorgegeben wird, insbesondere vorgegeben durch ein sinusförmiges Signal nach Frequenz, Phase und Amplitude, und dass das Basistoleranzband in Abhängigkeit von einer Anpassungsgröße verändert wird, um das Toleranzband zum Erzeugen des Teilphasenstroms zu erhalten. Die Anpassungsgröße des Teilphasenstroms jeweils eines Teilwechselrichters wird in Abhängigkeit von der Teilzwischenkreisspannung dieses Teilwechselrichters vorgegeben. Insbesondere erfolgt das Verändern so, dass für die Basistoleranzbänder aller Teilphasenströme jeweils eines Teilwechselrichters eine gemeinsame Korrekturgröße zum Bestimmen, insbesondere Skalieren der Anpassungsgröße vorgegeben wird. Es wird also für die drei Phasen jeweils nur eine Korrekturgröße vorgegeben. Die Basistoleranzbänder jeweils eines Teilwechselrichters verwenden somit dieselbe Korrekturgröße, denn sie verändern die Spannung desselben Teilzwischenkreises. Für jeden Teilphasenstrom ist aber eine eigene Anpassungsgröße vorgesehen. Die Anpassungsgrößen mehrerer Teilphasenströme desselben Teilwechselrichters können also unterschiedlich sein, aber auf derselben Korrekturgröße beruhen. Bspw. können die Anpassungsgrößen mehrerer Teilphasenströme desselben Teilwechselrichters sinusförmig sein und sich nur in ihrer Phase bzw. Phasenlage unterscheiden, während ihre Amplitude durch die Korrekturgröße bestimmt wird und gleich sein kann. Jede Anpassungsgröße kann als sinusförmiges Signal ausgebildet und verstanden werden, das insgesamt auf ein Toleranzband aufaddiert wird. Es kann auch jeweils als ein Abtastwert eines sinusförmigen Signals verstanden werden, der in jedem Abtastschritt auf den aktuellen Wert des Basistoleranzbandes aufaddiert wird. Das Vorgeben der Anpassungsgröße in Abhängigkeit von der Teilzwischenkreisspannung erfolgt besonders so, dass die Anpassungsgröße in Abhängigkeit von der Teilzwischenkreisasymmetrie vorgegeben wird.

Das Basistoleranzband wird somit insbesondere unabhängig von der Teilzwischenkreisspannung vorgegeben. Besonders kommt in Betracht, dass das Basistoleranzband jedes Teilphasenstroms einer Phase, also jedes Wechselrichters einer Phase, gleich ist. Besonders wird für einen dreiphasigen Wechselrichter mit mehreren gleichen oder zumindest gleichgroßen Teilwechselrichtern davon ausgegangen, dass genau drei Basistoleranzbänder vorgegeben werden. Insbesondere wird somit für jede Phase ein Basistoleranzband vorgegeben, nämlich in Abhängigkeit von dem jeweils einzuspeisenden Phasenstrom. Insbesondere werden drei Basistoleranzbänder vorgegeben, die sich lediglich in ihrer Phase unterscheiden, also insbesondere jeweils um 120 Grad zu einander verschoben sind.

Ausgehend von dem entsprechenden Basistoleranzband der betreffenden Phase wird dieses für jeden einzelnen Teilwechselrichter für den zu erzeugenden Teilphasenstrom der entsprechenden Phase um diese Anpassungsgröße verändert.

Im Idealfall, wenn keine Asymmetrie vorliegt, die Teilzwischenkreisasymmetrie also 0 ist, erfolgt auch kein Verändern durch die Anpassungsgröße. Wenn die Anpassungsgröße aufaddiert wird, ist sie in diesem Fall also 0. Wenn mit einer Anpassungsgröße multipliziert werden sollte, wäre diese in diesem Idealfall 1.

Somit wird eine einfache Möglichkeit der Anpassung geschaffen. Diese kann besonders so aussehen, dass ein Mittelwert über alle Teilzwischenkreisspannungen gebildet wird und für jeden Teilwechselrichter die Teilzwischenkreisasymmetrie bestimmt wird, also die Abweichung der Teilzwischenkreisspannung von dem Mittelwert aller Teilzwischenkreisspannungen. Diese Teilzwischenkreisasymmetrie kann dann unmittelbar in diese Anpassungsgröße umgerechnet werden bzw. die Anpassungsgröße kann aus dieser Teilzwischenkreisasymmetrie berechnet werden.

Die Anpassungsgröße, die besonders sinusförmig ist, kann auf das Basistoleranzband aufaddiert werden, um es dadurch zu verändern. Entsprechend kann die Anpassungsgröße auch, auch teilweise, einen negativen Wert annehmen, wodurch das Toleranzband gegenüber dem Basistoleranzband so angepasst wird, dass der Wirkstrom um diesen entsprechenden Betrag der Anpassungsgröße abgesenkt werden kann.

Besonders kommt in Betracht, dass im dreiphasigen Fall für jeden Teilwechselrichter entsprechend drei Toleranzbänder vorliegen, fürjede Phase eines, und jedes dieser Toleranzbänder in Abhängigkeit von dieser Korrekturgröße verändert wird, indem aus der einen Korrekturgröße für den Teilwechselrichter je eine Anpassungsgröße für jeden Teilphasenstrom berechnet wird.

Entsprechend ist die Vorgabe des individuellen Toleranzbandes jedes Teilphasenstromes jeweils eines Teilwechselrichters mit wenig Aufwand umzusetzen. Es braucht lediglich das Basistoleranzband jedes Teilphasenstroms um seine Anpassungsgröße verändert zu werden. Es kann ausreichend sein, eine Korrekturgröße pro Teilwechselrichter zu berechnen, die dann die Basis für drei Anpassungsgrößen bildet.

Es ist aber zu beachten, dass die Teilzwischenkreisspannung kontinuierlich, also insbesondere zu jedem Abtastzeitpunkt der Ansteuerung des Wechselrichters erfasst wird. Auch der Mittelwert der Teilzwischenkreisspannungen und im Ergebnis auch die jeweilige Teilzwischenkreisasymmetrie werden ebenfalls kontinuierlich bestimmt. Entsprechend kann sich auch die Korrekturgröße und damit jede Anpassungsgröße kontinuierlich verändern.

Gemäß einem Aspekt wird vorgeschlagen, dass die Anpassungsgröße zum Verändern des Basistoleranzbandes in Abhängigkeit von einem vorgebbaren Hilfssignal bestimmt wird, wobei das Hilfssignal einen zeitlichen Signalverlauf aufweist. Dieser zeitliche Signalverlauf kann insbesondere sinusförmig mit gleicher Frequenz wie der Gesamteinspeisestrom bzw. Gesamtwechselrichterstrom sein. Auf das Vorgeben des Hilfssignals wird weiter unten noch genauer eingegangen.

Es wird weiter vorgeschlagen, dass die Anpassungsgröße als Produkt gebildet wird aus wenigstens einem Wert des Hilfssignals und der Teilzwischenkreisasymmetrie. Dadurch kann erreicht werden, dass das Basistoleranzband zum Bestimmen des Toleranzbandes über dieses Hilfssignal verändert wird. Durch das Produkt mit der Teilzwischenkreisasymmetrie wird dieses Hilfssignal und damit die Veränderung des Basistoleranzbandes im Grunde skaliert.

Ein Wert des Hilfssignals ist dabei ein aktueller Wert des Hilfssignals, also zu einem aktuellen Zeitpunkt bzw. aktuellem Abtastzeitpunkt zudem auch die Teilzwischenkreisasymmetrie bestimmt wurde. Die Teilzwischenkreisasymmetrie ist insoweit auch mit der Zeit veränderlich, da sie von aktuellen Messwerten der Teilzwischenkreisspannung des betrachteten Teilwechselrichters und dem Mittelwert der betrachteten Teilzwischenkreisspannungen betrachteter Teilwechselrichter, also insbesondere aller Teilwechselrichter, abhängt. Es erfolgt also eine Veränderung des Basistoleranzbandes zum verwendeten Toleranzband insbesondere in jedem Abtastschritt.

Optional wird vorgeschlagen, dass die Anpassungsgröße als Produkt gebildet wird, aus einem Wert des Hilfssignals, der Teilzwischenkreisasymmetrie und zusätzlich einem Gewichtungsparameter. Dieses Produkt kann die Korrekturgröße bilden. Ein solcher Gewichtungsparameter kann zum Gewichten des Veränderns des Basistoleranzbandes vorgegeben werden. Besonders kann durch einen solchen Gewichtungsparameter festgelegt werden, wie schnell bzw. wie stark die individuelle Anpassung der einzelnen Toleranzbänder jedes Teilphasenstroms durchgeführt wird. Ein solcher Gewichtungsparameter kann ein Gewichtungsfaktor sein und kann also bestimmen, wie schnell Differenzen zwischen den Teilzwischenkreisspannungen verringert werden. Insoweit kann ein solcher Gewichtungsparameter die Wirkung eines Verstärkungsparameters bzw. einer Reglerverstärkung haben. Der Gewichtungsparameter kann somit synonym auch als Verstärkungsparameter oder Gewichtungsverstärkungsparameter bezeichnet werden. Der Gewichtungsfaktor sollte vorzugsweise für alle Teilwechselrichter gleich sein.

Es wird somit besonders vorgeschlagen, dass das Basistoleranzband in Abhängigkeit von einem vorgebbaren Referenzsignal bestimmt wird. Das Basistoleranzband wird also in Abhängigkeit von dem Referenzsignal bestimmt. Das Referenzsignal ist insbesondere ein sinusförmiges Signal, das den gewünschten, einzuspeisenden, oder anderweitig zu verwendenden Strom nach Betrag, Frequenz und Phase vorgibt. Das Basistoleranzband wird also um dieses Referenzsignal herum gelegt. Anschaulicher ausgedrückt weist das Toleranzband eine obere und untere Toleranzbandgrenze auf, die oberhalb bzw. unterhalb des vorgebbaren Referenzsignals vorlaufen.

Zusätzlich kann das Referenzsignal durch ein vorgebbares Hilfssignal modifiziert werden. Ein solches Hilfssignal kann ebenfalls als sinusförmiges Signal ausgebildet sein und auf das Referenzsignal aufgeschaltet, also aufaddiert werden. Besonders wird ein solches Hilfssignal in Abhängigkeit von der zugehörigen Spannung, also insbesondere der Netzspannung, wenn ein Einspeisestrom zum Einspeisen in das Netz erzeugt werden soll, vorgegeben. Das Hilfssignal kann in Phase mit diesem Spannungssignal liegen. Im Grunde kann das Hilfssignal dem Spannungssignal der Signalform nach entsprechen und sich nur in der Einheit und Amplitude unterscheiden.

Wird ein solches Hilfssignal auf das Referenzsignal aufaddiert, wenn reine Wirkleistung eingespeist werden soll, wenn das Referenzsignal also in Phase mit dem Spannungssignal liegt, so wird durch dieses Hilfssignal lediglich die Amplitude des Referenzsignals verändert. Ist aber das Referenzsignal zur Spannungssignalphase verschoben, weil ganz oder teilweise Blindleistung eingespeist werden soll, so führt das Aufaddieren des Hilfssignals auf das Referenzsignal auch zu einer Phasenverschiebung des Referenzsignals. Das Hilfssignal weist aber eine geringere Amplitude des Referenzsignals auf und kann bspw. im Bereich von 0-10 % des Referenzsignals liegen.

Es wird vorgeschlagen, dass im Falle der Verwendung eines solchen Hilfssignals die Anpassungsgröße zum Verändern des Basistoleranzbandes in Abhängigkeit von dem Hilfssignal bestimmt wird. Insbesondere wird vorgeschlagen, dass die Anpassungsgröße als Produkt gebildet wird aus wenigstens einem Wert des Hilfssignals und der Teilzwischenkreisasymmetrie. Das Produkt wird somit aus diesen beiden Werten und gegebenenfalls wenigstens einem weiteren Wert gebildet, also einem weiteren Faktor. Ein Wert des Hilfssignals ist somit besonders ein Augenblickswert dieses Hilfssignals, also der Wert, den das Hilfssignal in dem betreffenden Zeitpunkt, also insbesondere zu dem betreffenden Abtastzeitpunkt, annimmt, also ein Abtastwert. Die Teilzwischenkreisasymmetrie mag auch mit jedem Abtastzeitpunkt veränderlich sein, sie muss aber keinen vorgebbaren Sinusverlauf aufweisen, sondern wird kontinuierlich neu bestimmt, nämlich aus dem aktuellen Wert der Teilzwischenkreisspannung und dem aktuellen Mittelwert aus den betrachteten Teilzwischenkreisspannungen, also insbesondere dem aktuellen Mittelwert aller Teilzwischenkreisspannungen.

Gemäß einem Aspekt wird vorgeschlagen, dass das Hilfssignal zum Bestimmen der Anpassungsgröße als sinusförmiges Signal vorgegeben wird. Das Hilfssignal wird dabei insbesondere in Abhängigkeit von einer Referenzspannung vorgegeben, insbesondere mit gleicher Phase wie die der Referenzspannung. Die Referenzspannung kann insbesondere eine Netzspannung des elektrischen Netzes sein, in das die elektrische Leistung eingespeist wird, oder eine Klemmspannung der elektrischen Maschine, die mit dem Wechselrichter angesteuert werden soll.

Die Anpassungsgröße wird also insbesondere als Produkt aus einem Wert des Hilfssignals und der Teilzwischenkreisasymmetrie gebildet, wobei wenigstens ein weiterer Faktor hinzukommen kann. Dieses Hilfssignal kann in Abhängigkeit von der Referenzspannung vorgegeben werden, insbesondere mit gleicher Phase und damit auch mit derselben Frequenz wie die Referenzspannung. Die Referenzspannung ist besonders die Spannung, die für die Einspeisung in das elektrische Netz bzw. die Ansteuerung der elektrischen Maschine relevant ist. Am Beispiel des Einspeisens in das elektrische Netz bedeutet ein Gesamteinspeisestrom, der in Phase mit der Referenzspannung ist, das reine Wirkleistung eingespeist wird. In diesen Fall ist das Hilfssignal dann auch in Phase mit dem eingespeisten Strom.

Wird aber zumindest teilweise Blindleistung eingespeist, so liegt eine Phasenverschiebung zwischen Referenzspannung und eingespeistem Strom vor und damit auch eine Phasenverschiebung zwischen eingespeistem Strom und dem Hilfssignal.

Dadurch, dass das Hilfssignal sinusförmig ist und jeweils der aktuelle Wert des Hilfssignals mit der Teilzwischenkreisasymmetrie multipliziert wird, um die Anpassungsgröße zu bestimmen, würde die Anpassungsgröße ebenfalls den sinusförmigen Charakter des Hilfssignals beinhalten. Wenn im einfachsten Fall, der jetzt zur Veranschaulichung gewählt wird, die Teilzwischenkreisasymmetrie zumindest für eine Periode annähernd konstant sein, würde die Anpassungsgröße im Grunde den Verlauf des Hilfssignals annehmen, skaliert mit der Teilzwischenkreisasymmetrie.

Wird nur Wirkstrom eingespeist, liegt eingespeister Strom also in Phase mit der Referenzspannung, ist auch das Hilfssignal in Phase mit dem eingespeisten Strom und dadurch wird im Grunde auch nur eine solche Veränderung des Toleranzbandes vorgenommen, die auch für die Veränderung der Wirkleistung relevant ist. Mit anderen Worten wird bei Spannung null der Teilphasenstrom nicht verändert, sein Wert bleibt also bei null. Bei maximaler Spannung wird auch der Strom maximal erhöht, bzw. verringert je nachdem ob die Teilzwischenkreisspannung des jeweiligen Teilwechselrichters zu hoch oder zu niedrig ist.

Wird aber Blindleistung eingespeist so führt die faktische Aufschaltung des Hilfssignals in Phase mit der Referenzspannung, also phasenverschoben zum eingespeisten Strom, zu einer Veränderung der Phasenlage des Teilphasenstroms. Die Veränderung erfolgt im Grunde wirkleistungserhöhend bzw. wirkleistungsverringernd, wenn die Anpassungsgröße negativ ist. Mit anderen Worten führt die Verwendung dieses Hilfssignals in Phase mit der Referenzspannung dazu, dass das Aufschalten der Anpassungsgröße immer ein Verändern der eingespeisten Wirkleistung zur Folge hat. Es wird also in jedem Fall die eingespeiste Wirkleistung, bzw. die zum Ansteuern der elektrischen Maschine verwendete Wirkleistung, zugunsten der Anpassung derTeilzwischenkreisspannung verändert, sodass dies auch entsprechend Auswirkung auf die Wirkleistung im jeweiligen Teilzwischenkreis hat. Genau das ist auch erforderlich um die Teilzwischenkreisspannung zu verändern, denn sie hängt von der zusätzlich oder weniger entnommenen Wirkleistung ab.

Gemäß einem Aspekt wird vorgeschlagen, dass jeder Teilphasenstrom jeweils durch die Anpassungsgröße verändert wird oder werden kann, wobei die Anpassungsgrößen so gewählt werden, dass deren Änderungssumme, nämlich die Summe über alle Teilwechselrichter einer Phase, null ist, insbesondere so, dass die Änderungssummen für jede der Phasen null sind.

Jeder Teilphasenstrom wird somit durch die Anpassungsgröße verändert. Wenn die Teilzwischenkreisspannung des betreffenden Wechselrichters keiner Anpassung bedarf, weil sie in dem Moment insbesondere einem Mittelwert aller Teilzwischenkreisspannungen entspricht, kann die betreffende Anpassungsgröße in dem Moment auch null sein.

Dadurch, dass die Änderungssumme null ist, wird gewährleistet, dass durch die Veränderung der Teilphasenströme nur die Zwischenkreisspannungen angeglichen werden, ohne aber den eingespeisten Strom des Wechselrichters insgesamt zu verändern, und damit auch ohne den Netzstrom zu beeinträchtigen. Oben wurde bereits beschrieben, wie erreicht werden kann, dass die Änderungssumme null ist. Das kann nämlich z.B. dadurch erreicht werden, dass die Anpassungsgrößen proportional zur Abweichung der Teilzwischenkreisspannung von einem Mittelwert aller Teilzwischenkreisspannungen sind.

Vorzugsweise ist eine bzw. die gemeinsame Korrekturgröße zum Skalieren der Anpassungsgrößen jeweils eines Teilwechselrichters vorgesehen. Diese wird für jeden Teilwechselrichter jeweils so bestimmt, dass eine Summe der gemeinsamen Korrekturgrößen aller Teilwechselrichter null ist. Damit kann auf einfache Weise erreicht werden, dass die genannte Änderungssumme für jede Phase null ist. Entsprechend kann über die Korrekturgröße die gewünschte Vorgabe der Anpassungsgröße erreicht werden. Durch die Korrekturgröße kann erreicht werden, dass die Anpassungsgrößen proportional zur Abweichung der Teilzwischenkreisspannung von einem Mittelwert aller Teilzwischenkreisspannungen sind.

Gemäß einem Aspekt wird vorgeschlagen, dass das Hilfssignal zum Bestimmen der Anpassungsgröße so vorgegeben wird, dass ein Energieeintrag in den Teilzwischenkreis des jeweiligen Teilwechselrichters maximiert wird. Im Grunde kann dies durch die vorbeschriebene Verwendung des sinusförmigen Hilfssignals erreicht werden, das in Phase mit der Referenzspannung vorgegeben wird. Dadurch wird der Energieeintrag maximiert.

Das Maximieren ist nicht absolut zu verstehen, sondern bezieht sich besonders auf eine Veränderung eines Effektivwertes des veränderten Teilphasenstroms. Wird also beispielsweise der Teilphasenstrom so verändert, dass sein Effektivwert um einen bestimmten Prozentsatz steigt, beispielsweise 5 %, so wird das Hilfssignal so vorgegeben, dass sich der Energieeintrag in den Teilzwischenkreis soweit erhöht, wie das bei dieser Erhöhung des Effektivwertes des veränderten Phasenstroms maximal möglich ist, wird also so stark erhöht, wie das bei dem beispielhaft genannten 5 % maximal möglich wäre.

Hier ist zu beachten, dass die Referenzspannung nicht unbedingt sinusförmig sein muss und in einem solchen Fall auch anderweitig der Energieertrag bezogen auf die Veränderung des Effektivwertes des veränderten Teilphasenstroms im Zwischenkreis maximiert wird. Das Hilfssignal wird besonders so vorgegeben, dass anschaulich gesprochen, eine Veränderung des Teilphasenstroms nicht so erfolgt, dass die Veränderung in Blindstrom vergeudet wird. Stattdessen wird das Hilfssignal so vorgebeben, dass der Teilphasenstrom so verändert wird, dass diese Veränderung immer wirkleistungseffektiv ist.

Gemäß einem Aspekt wird vorgeschlagen, dass die Teilzwischenkreisspannung gemessen oder durch einen Zustandsbeobachter erfasst wird, insbesondere das zwischen Messen und Beobachten nach einem Auswahlkriterium gewechselt wird.

Ein solches Auswahlkriterium kann besonders die erwartbare Messgenauigkeit sein. Besonders bevorzugt wird die Teilzwischenkreisspannung durch einen Zustandsbeobachter erfasst. Ein solcher Zustandsbeobachter kann im Grunde ein Modell, das auch als digitaler Zwilling bezeichnet werden kann, parallel zum tatsächlichem System laufen lassen.

Dieses Modell bildet besonders auch die vorgeschlagene Vorgabe des Toleranzbandes jedes Teilphasenstroms in Abhängigkeit von der Teilzwischenkreisspannung des jeweiligen Teilwechselrichters ab. Durch Vergleich einer Ausgangsgröße des tatsächlichen Systems und des Modells, also des digitalen Zwillings, können die Zustände in dem Modell, insbesondere die zu erfassende Teilzwischenkreisspannung angepasst werden. Die Teilzwischenkreisspannung ist dann entsprechend sofort als weiterverarbeitbare Größe vorhanden. So kann der Mittelwert der Teilzwischenkreisspannungen als auch die jeweilige Teilzwischenkreisasymmetrie schnell, insbesondere für jeden Abtastzeitpunkt, bestimmt werden.

Als zu vergleichender Ausgang des Beobachters bzw. des Modells, also des digitalen Zwillings, kann die Teilzwischenkreisspannung selbst verwendet werden In diesem Fall wird die Teilzwischenkreisspannung zwar auch gemessen, aber die Messqualität bzw. Bandbreite kann hier gering sein und wird durch den Beobachter verbessert, der für die Durchführung des Toleranzbandverfahrens ohnehin erfasst werden muss.

Ein Auswahlkriterium zum Wechseln zwischen Messen und Beobachten bzw. umgekehrt kann in einem Vergleich zwischen Messwerten der Teilzwischenkreisspannung und beobachteten Werten der Teilzwischenkreisspannung bestehen.

Erfindungsgemäß wird zudem ein Wechselrichter vorgeschlagen zum Einspeisen elektrischer Leistung in ein elektrisches Netz oder zum Ansteuern einer elektrischen Maschine und dazu wird Folgendes vorgeschlagen.

Der Wechselrichter umfasst mehrere parallelgeschaltete Teilwechselrichter mit jeweils einem Gleichspannungszwischenkreis als Teilzwischenkreis des jeweiligen Teilwechselrichters, wobei jeder Teilzwischenkreis eine Teilzwischenkreisspannung aufweist, die Teilzwischenkreise zueinander parallelgeschaltet sind, jeder Teilwechselrichter dazu vorbereitet ist, dass er mittels eines Toleranzbandverfahrens einen Teileinspeisestrom erzeugt, jeweils mit einem oder mehreren Teilphasenströmen, der Wechselrichter dazu vorbereitet ist, dass die Teileinspeiseströme der mehreren Teilwechselrichter zu einem Gesamteinspeisestrom addiert werden, zum Erzeugen jedes Teilphasenstroms jeweils ein Toleranzband vorgegeben wird, und in jedem Teilwechselrichter das Toleranzband jedes Teilphasenstroms in Abhängigkeit von der Teilzwischenkreisspannung dieses Teilwechselrichters vorgegeben wird.

Jeder Teilwechselrichter ist dadurch dazu vorbereitet, mittels eines Toleranzbandverfahrens einen Teileinspeisestrom erzeugt, dass er dazu eine entsprechende Ansteuereinheit zum Ansteuern entsprechender Halbleiterschalter aufweist. Die Ansteuereinheit empfängt dazu jeweils den abgegebenen Teilphasenstrom und auf ihr, oder einer übergeordneten Steuereinheit, ist ein entsprechendes Toleranzbandverfahren implementiert.

Der Wechselrichter ist dadurch dazu vorbereitet die Verfahrensschritte auszuführen bzw. Steuereigenschaften zu erfüllen, dass er eine entsprechende Wechselrichtersteuereinheit aufweist, auf der ein entsprechendes Verfahren implementiert ist.

Insbesondere sind die Teilwechselrichter des Wechselrichters so verschaltet, dass die Einspeiseströme der Teilwechseltrichter zu einem Gesamteinspeisestrom addiert werden.

Gemäß einem Aspekt ist der Wechselrichter dadurch gekennzeichnet, dass er eine Wechselrichtersteuereinheit aufweist, wobei die Wechselrichtersteuereinheit in Kommunikation mit allen Teilwechselrichtern des Wechselrichters steht und insbesondere dazu vorbereitet ist, Werte der Teilzwischenkreisspannungen aufzunehmen und zu verarbeiten, was auch das Weiterleiten an entsprechende Teilwechselrichter beinhaltet. Außerdem oder alternativ ist die Wechselrichtersteuereinheit dazu vorbereitet, einen Mittelwert der Teilzwischenkreisspannungen zu bestimmen, also der Teilzwischenkreisspannungen aller Teilwechselrichter, und/oder eine Teilzwischenkreisasymmetrie zu bestimmen und/oder die Teilwechselrichter zu koordinieren.

Gemäß einem Aspekt ist der Wechselrichter, insbesondere die Wechselrichtersteuereinheit dazu vorbereitet, ein Verfahren gemäß einem der vorstehend beschriebenen Aspekte auszuführen. Insbesondere kann das entsprechende Verfahren dazu auf der Wechselrichtersteuereinheit implementiert sein.

Erfindungsgemäß wird auch eine Windenergieanlage vorgeschlagen, die einen Generator zum Erzeugen elektrischer Leistung aus Wind und einen Wechselrichter zum Einspeisen der elektrischen Leistung oder eines Teils davon in ein elektrisches Versorgungsnetz aufweist. Dazu wird vorgeschlagen, dass ein Wechselrichter gemäß einem der vorstehenden Aspekte verwendet wird.

Damit kann mit der Windenergieanlage in das elektrische Versorgungsnetz eingespeist werden und die Vorteile des beschriebenen Wechselrichters bzw. damit auch die Vorteile des beschriebenen Verfahrens genutzt werden. Insbesondere kann erreicht werden, dass Windenergieanlagen unterschiedlicher Größe konzipiert werden können, mit den gleichen Teilwechselrichtern, wobei lediglich je nach Nennleistung der Windenergieanlage entsprechend viele solcher Teilwechselrichter verwendet werden. Die Teilwechselrichter sind an ihren Gleichspannungszwischenkreisen miteinander verbunden und durch die Eigenschaften des vorgeschlagenen Wechselrichters können Ausgleichströme zwischen den Gleichspannungszwischenkreisen vermieden oder zumindest verringert werden.

Die Erfindung wird nun nachfolgend beispielhaft unter Bezugnahme auf die begleitenden Figuren näher erläutert.
- Figur 1: zeigt eine Windenergieanlage in einer perspektivischen Darstellung.
- Figur 2: zeigt einen schematischen Aufbau eines Teils eines Teilwechselrichters.
- Figur 3: zeigt einen Teil eines Teilwechselrichters gemäß Figur 2 in einer stärker vereinfachten bzw. symbolisierten Darstellung.
- Figur 4: zeigt schematisch einen aus mehreren Teilwechselrichtern zusammengesetzten Wechselrichter.
- Figur 5: zeigt ein Strukturbild zum Erläutern eines vorgeschlagenen Verfahrens.
- Figur 6: zeigt mehrere Diagramme zum Veranschaulichen der Wirkung eines in einem vorgeschlagenem Verfahren verwendeten Hilfssignals.

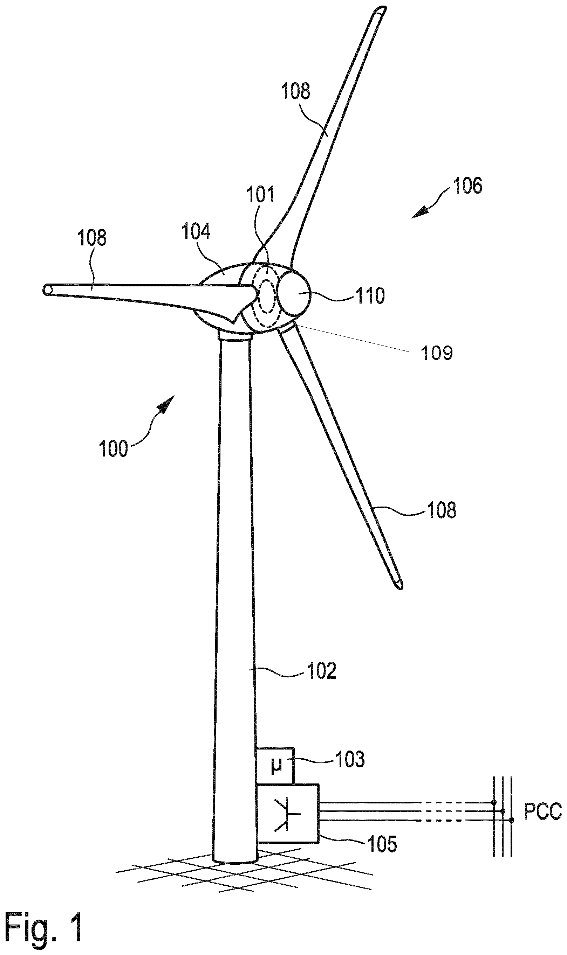

**Figur 1** zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten. Die Anlagensteuerung 103 kann mit einer Wechselrichtersteuerung gekoppelt sein, oder sie beinhalten.

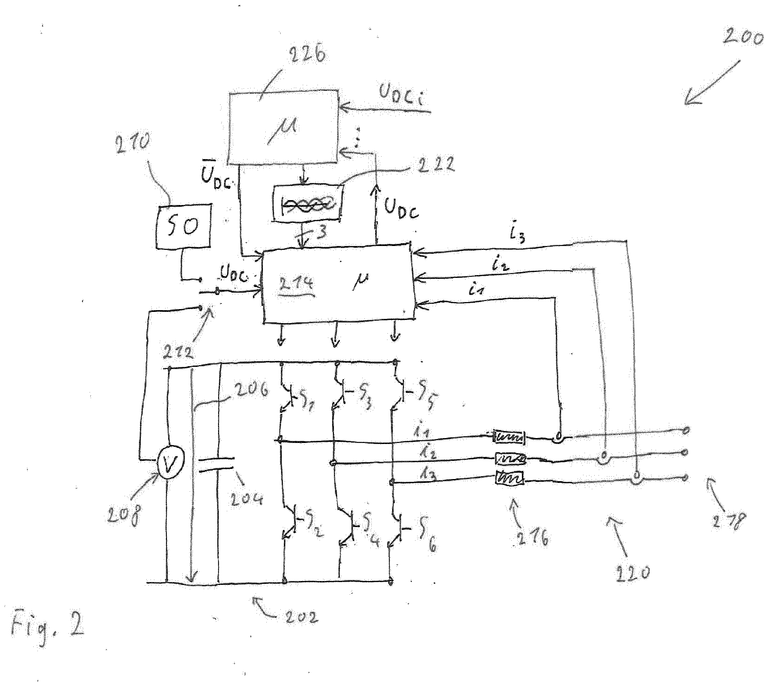

**Figur 2** zeigt einen Teilwechselrichter 200 bzw. einen Ausschnitt daraus. Der Teilwechselrichter 200 weist einen Teilzwischenkreis 202 auf, der eine Zwischenkreiskapazität 204 enthält, an der eine Teilzwischenkreisspannung 206 anliegt. Die Teilzwischenkreisspannung 206 kann über ein Spannungssensor 208 oder einen Zustandsbeobachter210 erfasst werden. An einem Auswahlschalter 212 kann entschieden werden, ob die Teilzwischenkreisspannung 206 als Messwert oder als Schätzwert verwendet wird. In jedem Fall ist sie als verwendete Teilzwischenkreisspannung U_{DC} gekennzeichnet und geht in die Teilwechselrichtersteuerung 214 ein. Natürlich unterscheidet sich die verwendete Teilzwischenkreisspannung U_{DC} abhängig davon, ob, je nach Schalterstellung des Auswahlschalters 212, die gemessene oder beobachtete Teilzwischenkreisspannung verwendet wird, was lediglich in Figur 2 zur Vereinfachung nicht weiter thematisiert wird.

Zum Erzeugen eines dreiphasigen Teileinspeisestroms i_{1,2,3} sind entsprechende Halbleiterschalter S1 - S6 vorgesehen. Diese können durch die entsprechende Teilwechselrichtersteuerung 214 angesteuert werden. Üblicherweise weist ein solcher Teilwechselrichter Ausgangsdrosseln bzw. eine dreiphasige Ausgangsdrossel 216 auf und der Teilwechselrichter 200 gibt den dreiphasigen Ausgangsstrom i_{1,2,3} bzw. die drei einzelnen Teilphasenströme i₁, i₂, und is am Teilwechselrichterausgang 218 aus. Die dreiphasige Ausgangsdrossel 216 kann auch an anderer Stelle, auch außerhalb des Teilwechselrichters, also außerhalb des Teilwechselrichterausgangs 218, angeordnet sein.

Es ist ein dreiphasiger Stromaufnehmer 220 vorgesehen, der jeden der drei Ströme i₁, i₂, und i₃, erfasst und an die Teilwechselrichtersteuerung 214 gibt.

Die Teilwechselrichtersteuerung ist dazu vorbereitet, den Teilwechselrichter über ein Toleranzbandverfahren zu Steuern. Dazu erhält die Teilwechselrichtersteuerung 214 zudem jeweils ein Toleranzband für jeden der drei zu erzeugenden Ströme i₁, i₂, und is. Diese drei einzelnen Toleranzbänder können auch als ein dreiphasiges Toleranzband zusammengefasst werden und durch einen Toleranzbandblock 222 entsprechend dreiphasig vorgegeben werden. Der Toleranzbandblock 222 kann durch eine zentrale Wechselrichtersteuerung 224 vorgegeben werden. Im laufenden Betrieb wird im Grunde für jede Phase, also für jeden der Teilphasenströme i₁, i₂, und is ein Toleranzband vorgegeben.

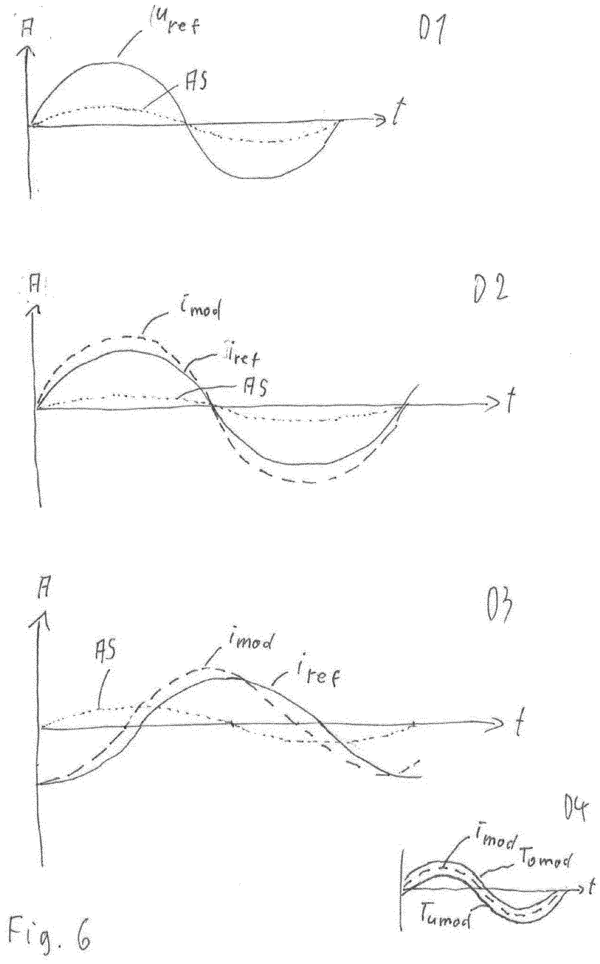

Ein solches Toleranzband, das in Figur 6 in dem untersten kleinen Diagramm veranschaulicht wird, weist eine obere und untere Toleranzbandgrenze auf. Der jeweils erfasste Strom wird mit diesen Grenzen verglichen. Erreicht der Strom eine obere Grenze schaltet wenigstens einer der Halbleiterschalter S1 - S6. Für das Beispiel des ersten Teilphasenstroms i₁, schaltet dann also einer der Teilwechselrichterschalter S1 und S2, so, dass einem weiteren Ansteigen des betreffenden Teilphasenstroms entgegengewirkt wird. Erreicht ein Teilphasenstrom seine untere Toleranzbandgrenze, so wird entsprechend so geschaltet, dass seinem Abfall entgegengewirkt wird, und er wieder ansteigt oder zumindest nicht weiter abfällt.

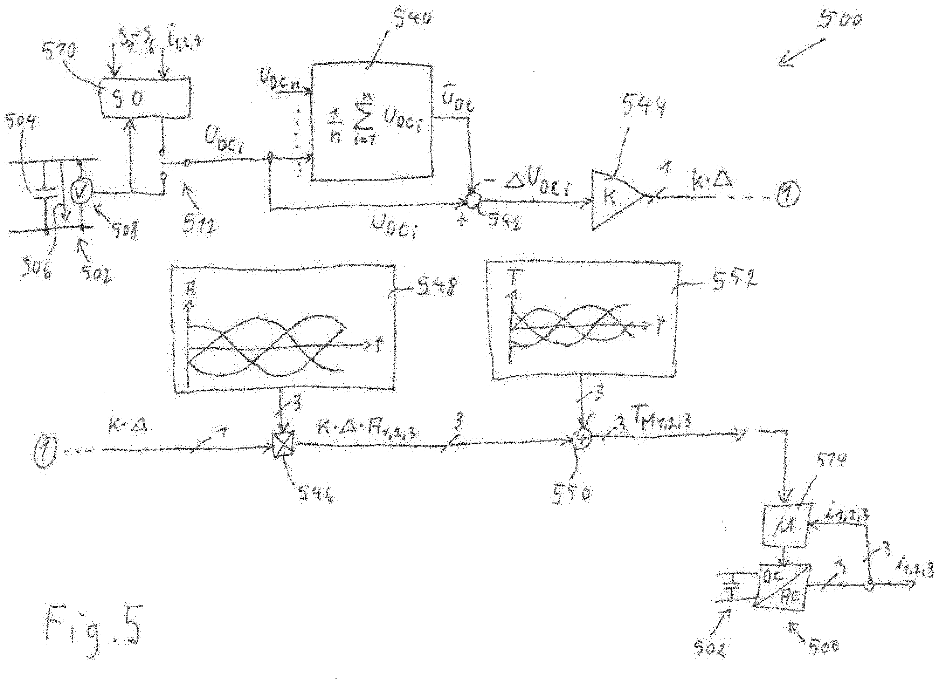

Gemäß einem vorgeschlagenen Aspekt wird das jeweilige Toleranzband der drei einzelnen Phasenströme bzw. das dreiphasige Toleranzband das insgesamt für den Teilwechselrichter vorgegeben wird modifiziert. Das erfolgt in Abhängigkeit der verwendeten Teilzwischenkreisspannung U_{DC} und in Abhängigkeit von einem Mittelwert *U̅_{DC}* insbesondere aller Teilzwischenkreisspannungen, insbesondere einschließlich auch der verwendeten Teilzwischenkreisspannung U_{DC} des vorliegenden Teilwechselrichters 200. Details dazu werden noch unter Bezugnahme auf Figur 5 erläutert.

Zur Koordination ist eine Zentralsteuereinrichtung 226 vorgesehen. Sie erhält unter anderem die Teilzwischenkreisspannung U_{DCi} insbesondere aller Teilwechselrichter, einschließlich des vorliegenden Teilwechselrichters, und bestimmt daraus den Mittelwert *U̅_{DC}.* Die Teilwechselrichtersteuerung 214 kann die verwendete Teilzwischenkreisspannung U_{DC} an die zentrale Steuereinrichtung 226 übergeben und entsprechend können alle übrigen Teilwechselrichter agieren. Dafür hat jeder Teilwechselrichter seine eigene Teilwechselrichtersteuerung. Die zentrale Steuereinrichtung 226 ist aber insbesondere nur einmal für alle Teilwechselrichter zusammen vorgesehen.

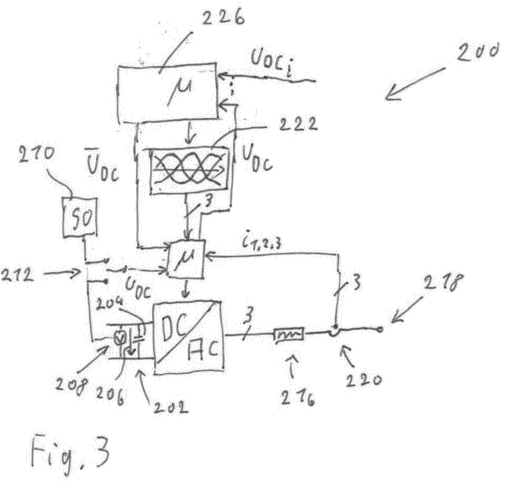

**Figur 3** zeigt im Grunde den Teilwechselrichter 200 der Figur 2 in einer vereinfachten bzw. symbolisierten Darstellung, in der die Details der Halbleiterschalter S1 - S6 der Figur 2 nicht gezeigt sind und die drei Teilphasenströme i₁, i₂, und is lediglich als dreiphasiger Strom i_{1,2,3} dargestellt sind. Damit soll besonders erläutert werden, dass die jeweils durch eine durch "3" symbolisierte Dreiphasigkeit für entsprechend drei einzelne Phasen und entsprechend drei einzelne Bauelemente oder Teilbauelemente und drei einzelne Stromaufnehmer und im Übrigen auch drei einzelne Totbänder steht.

Um die Zusammenhänge zwischen den Figuren 2 und drei besser zu verdeutlichen, werden gleiche Bezugszeichen verwendet, was nicht ausschließen soll, dass es Unterschiede im Detail der einzelnen Elemente geben kann.

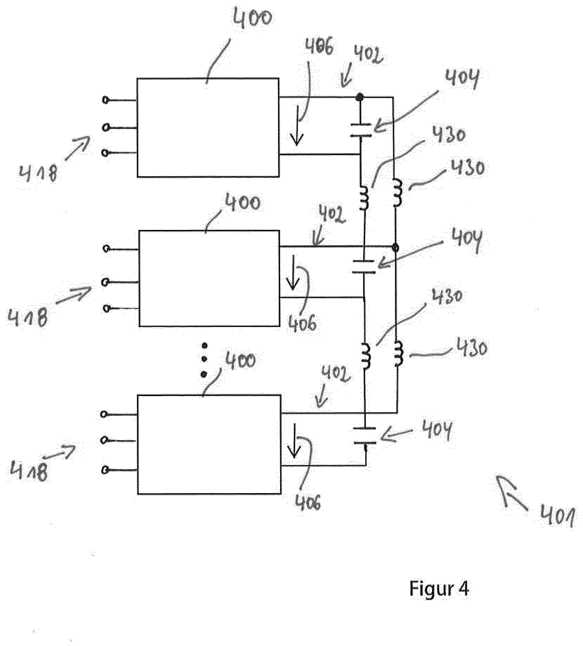

**Figur 4** zeigt schematisch einen Wechselrichter 401, der mehrere Teilwechselrichter 400 aufweist. Exemplarisch sind drei Teilwechselrichter 400 dargestellt, die aber auch exemplarisch für weitere stehen. Grundsätzlich bleibt auch in Betracht, dass nur zwei Teilwechselrichter 400 den Wechselrichter 401 bilden. Außerdem kann der Wechselrichter weitere Elementen aufweisen, wie eine zentrale Steuereinheit.

Die Teilwechselrichter 400 entsprechen im Grunde den Teilwechselrichtern 200 der Figuren 2 und 3. Jeder Teilwechselrichter 400 weist einen Teilwechselrichterausgang 418 auf, sowie einen Teilzwischenkreis 402 jeweils mit einer Teilzwischenkreiskapazität 404, die synonym auch als Teilzwischenkreiskondensator bezeichnet werden kann, was auch für die Teilzwischenkreiskapazität 204 gilt. Entsprechend liegt über jeder Teilzwischenkreiskapazität 404 eine Teilzwischenkreisspannung 406 an.

In Figur 4 ist besonders dargestellt, dass die einzelnen Teilwechselrichter 400 an ihrem Teilzwischenkreis 402 über Leitungen und damit Leitungsimpedanzen 430 gekoppelt sind. Unterscheiden sich die Teilzwischenkreisspannungen 406, so führt das entsprechend zu Ausgleichsströmen über diese Leitungsimpedanzen 430.

Die Teilzwischenkreiskapazität 404 kann auch jeweils als lokaler Zwischenkreiskondensator bezeichnet werden, denn diese Zwischenkreiskondensatoren sind jeweils an bzw. in dem Teilwechselrichter 400 angeordnet. Die Leitungsimpedanzen 430 sind insbesondere parasitäre Leitungsimpedanzen der Verbindungen zwischen den Teilzwischenkreisen 402. Die Teilwechselrichter 400 können auch als dreiphasige Stromrichter oder dreiphasige Teilstromrichter bezeichnet werden.

Die Teilwechselrichter 400 entsprechen im Wesentlichen den Teilwechselrichtern 200 der Figuren 2 und 3, wobei bei ihnen aber jeweils der Teilwechselrichterausgang 418 und der Teilzwischenkreis 402 seitenvertauscht sind, im Vergleich mit dem Teilwechselrichterausgang 218 und dem Teilzwischenkreis 202 gemäß Figuren 2 und 3. An der Funktionalität ändert dieses Vertauschen der Seiten allerdings nichts.

**Figur 5** zeigt ein Strukturbild zum Erläutern eines Ablaufs eines erfindungsgemäßen Verfahrens bzw. eines Teils davon zumindest gemäß einem Aspekt. Das Strukturbild ist dabei im Wesentlichen losgelöst von der konkreten Umsetzung in einem Wechselrichter zu verstehen, soweit nicht konkrete Elemente eines Wechselrichters oder Teilwechselrichters angesprochen sind.

Figur 5 zeigt somit ein Strukturbild 500, das im Grunde oben links mit einem Teilzwischenkreis 502 mit Teilzwischenkreiskondensator 504 startet, wobei der Teilzwischenkreis 502 eine Teilzwischenkreisspannung 506 aufweist. Die Teilzwischenkreisspannung 506 kann durch einen Spannungssensor 508 erfasst werden. Die Teilzwischenkreisspannung 506 kann auch durch einen Zustandsbeobachter 510 beobachtet werden. Der Zustandsbeobachter 510, der auch als Teilzustandsbeobachter bezeichnet werden kann, kann als Eingangsgrößen Schalterstellungen S1 - S6 sowie den dreiphasigen Teileinspeisestrom i_{1,2,3} erhalten. Darauf basierend kann die Teilzwischenkreisspannung 506 geschätzt und als Schätzwert ausgegeben werden. Je nach Qualität der erfassten oder geschätzten Teilzwischenkreisspannung kann eine davon durch den Auswahlschalter 512 ausgewählt werden. Es ergibt sich die verwendete Teilzwischenkreisspannung U_{DCi}, die insoweit als i-te Teilzwischenkreisspannung bezeichnet wird, wenn angenommen wird, dass sich dieses Strukturbild 500 und insbesondere der Teilzwischenkreis 502 auf einen i-ten Teilwechselrichter bezieht.

Diese verwendete Teilzwischenkreisspannung U_{DCi} des i-ten Teilwechselrichters geht dann in einen Mittelwertblock 540 ein. Dieser Mittelwertblock 540 erhält von allen hier zugrunde gelegten n Teilwechselrichtern jeweils die verwendete Teilzwischenkreisspannung und bildet daraus den Mittelwert *U̅_{DC}* der Teilzwischenkreisspannungen jedes der n Wechselrichter.

Dieser Mittelwert *U̅_{DC}* wird dann von der i-ten also jeweiligen Teilzwischenkreisspannung U_{DCi} des jeweiligen Teilwechselrichters an der ersten Summierstelle 542 abgezogen. Das Ergebnis ist die Teilzwischenkreisasymmetrie ΔU_{DCi}. Diese kann mit einem Gewichtungsfaktor k in dem Gewichtungsblock 544 multipliziert werden. Das Ergebnis ist somit eine gewichtete Teilzwischenkreisasymmetrie, die in dem Strukturbild vereinfachend als k·Δ bezeichnet wird.. Das Strukturbild setzt sich dann links im unteren Teil der Figur 5 fort, wo die gewichtete Teilzwischenkreisasymmetrie k·Δ an der Produktstelle 546 mit einem dreiphasigen Hilfssignal multipliziert wird und das Ergebnis ist das dreiphasige, gewichtete, mit der Teilzwischenkreisasymmetrie multiplizierte Hilfssignal k·Δ·A_{1,2,3}. Die gewichtete Teilzwischenkreisasymmetrie k·Δ kann eine Korrekturgröße bilden bzw. als diese bezeichnet werden. Jede Phase des dreiphasigen, gewichteten, mit der Teilzwischenkreisasymmetrie multiplizierten Hilfssignals k·Δ·A_{1,2,3} kann eine Anpassungsgröße bilden. Dadurch kann jeder Teilphasenstrom jeweils durch eine Anpassungsgröße verändert werden.

Das dreiphasige Hilfssignal kann durch den Hilfssignalblock 548 vorgegeben werden. Das dreiphasige Hilfssignal kann besonders aus drei um 120° zueinander phasenverschobenen Sinusverläufen bestehen, die jeweils ohne Phasenverschiebung zu einer Referenzspannung der jeweiligen Phasen vorgegeben werden. Je Phase wird somit ein solches Hilfssignal vorgegeben und somit wird ein dreiphasiges Signal in die Produktstelle 546 eingegeben. Das kann besonders so realisiert werden, dass die Produktstelle 546 drei einzelne Produktstellen aufweist, die jeweils als Eingangssignal dieselbe gewichtete Teilzwischenkreisasymmetrie k·Δ erhalten, sodass somit drei einzelne Produkte gebildet werden und drei einzelne mit der gewichteten Teilzwischenkreisasymmetrie multiplizierte Hilfssignale herauskommen, die jeweils eine Anpassungsgröße bilden können. Sie sind entsprechend nur zur Zeichnungsvereinfachung in das mit der gewichteten Teilzwischenkreisasymmetrie multiplizierte Teilhilfssignal k·Δ·A_{1,2,3} zusammengefasst. Die Symbolik des dreiphasigen Signals kann somit als Vereinfachung für drei einzelne Signale und dabei auch drei einzelne Pfade verstanden werden.

Das so gebildete dreiphasige mit der gewichteten Teilzwischenkreisasymmetrie multiplizierte Hilfssignal k·Δ·A_{1,2,3} wird dann in der zweiten Summierstelle 550 auf das unmodifizierte dreiphasige Toleranzband aufaddiert. Und das Ergebnis ist das dreiphasige modifizierte Toleranzband T_{M1,2,3}. Das unmodifizierte Toleranzband kann durch den Toleranzbandblock 552 vorgegeben und an die zweite Summierstelle 550 gegeben werden.

Der Toleranzbandblock 552 zeigt als Symbol nur drei Phasenströme, die auch als Referenzsignal zu verstehen sind. Der Toleranzbandblock 552 kann dennoch Toleranzbänder enthalten bzw. vorgeben, sodass entsprechend auch an der zweiten Summierstelle 550 jeweils Tupel statt einzelner Zahlen zu addieren wären. In der praktischen Ausführung kann aber tatsächlich für jede Phase jeweils ein Referenzsignal modifiziert werden, und in einem weiteren Schritt ein Toleranzband um das modifizierte Referenzsignal gelegt werden, um dadurch das modifizierte Toleranzband zu erhalten.

Der Gewichtungsblock 544 und damit der Gewichtungsfaktor k können auch dazu verwendet werden, die Teilzwischenkreisasymmetrie ΔU_{DCi} zu normieren, also besonders die physikalische Einheit Spannung herauszunehmen. Bzw. es kann in dem Gewichtungsblock 544 bzw. mit dem Gewichtungsfaktor k die Normierung berücksichtigt werden, die die Teilzwischenkreisasymmetrie oder bereits die Teilzwischenkreisspannungen durch Weiterverarbeitung im Prozessrechner erfahren haben.

Gleichwohl kann durch den Gewichtungsfaktor k eine Gewichtung vorgenommen werden, er kann also erhöht werden, um die Veränderung des Toleranzbandes zu verstärken oder er kann verringert werden um die Veränderung des Toleranzbandes abzuschwächen. Dabei kann dieser Gewichtungsfaktor k auf die Amplitude, die für das Hilfssignal im Hilfssignalblock 548 vorgesehen ist, angepasst sein.

Das soll an folgendem vereinfachten Beispiel veranschaulicht werden. Wenn bei einer Teilzwischenkreisasymmetrie von 10 V das Toleranzband um 5% erhöht werden soll, kann k 1/200V betragen, wenn das Hilfssignal im Hilfssignalblock 548 mit selber Amplitude wie das Referenzsignal im Toleranzbandblock 552 vorgegeben wird.

Das Vorgeben des Toleranzbandes im Toleranzbandblock 552 kann dadurch erfolgen, dass lediglich für jede Phase ein Referenzsignal vorgegeben wird, also ein Referenzstromverlauf für den jeweils zu erzeugenden Teilphasenstrom. Ein solches Referenzsignal bzw. ein solcher Referenzstrom liegt somit im Grunde in der Mitte von einer Toleranzobergrenze und einer Toleranzuntergrenze. Die Toleranzobergrenze und die Toleranzuntergrenze können dann um das jeweilige Referenzsignal gelegt werden, wodurch sich das Toleranzband ergibt. In diesem Sinne kann eine Veränderung des Toleranzbandes so erfolgen, dass das Referenzsignal verändert wird und die Toleranzobergrenze und die Toleranzuntergrenze dann um das Toleranzband gelegt werden bzw. entsprechend an das veränderte Referenzsignal angepasst werden. Die vorgeschlagene Berechnung, besonders in der zweiten Summierstelle 550 kann vorzugsweise nur auf das dreiphasige Referenzsignal, also drei Mal auf jedes einphasige Referenzsignal angewendet werden. Insoweit kann auch das modifizierte Toleranzband T_{M1,2,3} in der praktischen Umsetzung zunächst nur die modifizierten Referenzsignale bzw. modifizierten Referenzteilphasenströme beinhalten.

Dieses so modifizierte dreiphasige Toleranzband T_{M1,2,3} kann dann zur weiteren Verarbeitung in die Teilwechselrichtersteuerung 514 gegeben werden. Die Teilwechselrichtersteuerung 514 erhält zusätzlich die erfassten Teilphasenströme bzw. den erfassten dreiphasigen Teilphasenstrom i_{1,2,3}. Darauf basierend wird dann das Toleranzbandverfahren in der Teilwechselrichtersteuerung 514 durchgeführt und entsprechend durch die Halbleiter in dem Teilwechselrichter 500 umgesetzt und der Teilwechselrichter 500 der in Figur 5 rechts unten dargestellt ist, enthält somit denselben Teilzwischenkreis 502, von dem, wie oben links in Figur 5 dargestellt, auch die Teilzwischenkreisspannung 506 erfasst und eingangs verwendet wurde.

Gemäß Figur 5 wird das dreiphasige modifizierte Toleranzband T_{M1,2,3} in die Teilwechselrichtersteuerung 514 eingegeben. Alternativ kann aber auch zumindest ein Teil der in Figur 5 illustrierten Berechnung in dem Teilwechselrichter 514 durchgeführt werden. Insbesondere kommt in Betracht, dass alle Berechnungen ab der ersten Summierstelle 542 in dem Teilwechselrichter 540 durchgeführt werden.

Insbesondere der Mittelwertblock 540 wird zweckmäßigerweise in einer Zentralsteuereinrichtung wieder Zentralsteuereinrichtung 226, die in Figur 2 gezeigt ist, zentral durchgeführt. Der Mittelwert *U̅_{DC}* aller Teilzwischenkreisspannungen kann dabei von dem Mittelwertblock 540 bzw. der zentralen Steuereinrichtung, in der dieser Mittelwertblock 540 implementiert sein kann, berechnet und an alle Teilwechselrichter gegeben werden.

**Figur 6** veranschaulicht in dem oberen Diagramm D1 eine sinusförmige Referenzspannung u_{ref}, die eine Netzspannung einer Phase des elektrischen Netzes sein kann in das ein Gesamteinspeisestrom eingespeist wird. Dazu kommt auch in Betracht, dass diese Referenzspannung unmittelbar jeweils an einem Teilwechselrichterausgang, wie dem Teilwechselrichterausgang 218 oder 418 erfasst wird.

Dazu wird in Phase mit anderer physikalischer Einheit als die Referenzspannung u_{ref}, insbesondere mit der Einheit Ampere, das Hilfssignal AS vorgebeben. Dieses Hilfssignal AS kann eine Phase des dreiphasigen Hilfssignals bilden, das gemäß dem Strukturbild 500 der Figur 5 im Hilfssignalblock 548 vorgegeben wird.

Das mittlere Diagramm D2 erläutert die Wirkung des Hilfssignals AS, wenn reine Wirkleistung eingespeist wird, wenn der Referenzstrom i_{ref} also in Phase mit der Referenzspannung u_{ref} und damit in Phase mit dem Hilfssignal AS liegt.

In diesem Fall führt das Aufaddieren des Hilfssignals AS auf das Referenzsignal i_{ref} zu einem modifizierten Stromsignal i_{mod}, das ebenfalls in Phase mit dem Referenzstrom i_{ref} liegt. Mit anderen Worten wird, wenn die zugrundeliegende Teilzwischenkreisasymmetrie positiv ist, die Amplitude des Referenzstroms i_{ref} erhöht. Der Referenzstrom i_{ref} ist im Grunde die Basis des vorzugebenen Toleranzbandes, das diesen Referenzstrom i_{ref} im Grunde mit einem oberen und unteren Toleranzband einhüllt. Zunächst werden aber nur die Referenzverläufe, und noch nicht die tatsächlichen Toleranzbänder bzw. ihre Grenzen betrachtet.

In dem unteren Diagramm D3 ist eine Situation veranschaulicht, bei der Blindleistung eingespeist wird. In diesem Fall ist der Referenzstrom i_{ref} um 90 % zu der Referenzspannung u_{ref}, die der besseren Übersichtlichkeit halber nur im oberen Diagramm D1 gezeigt ist, verschoben. Das Hilfssignal AS liegt aber weiterhin in Phase mit der Referenzspannung u_{ref}.

Wird nun dieses Hilfssignal AS, das dadurch auch zu dem Referenzstrom i_{ref} phasenverschoben ist, auf diesen aufgeschaltet, so ergibt sich wieder ein modifiziertes Stromsignal i_{mod}, das gegenüber dem Referenzstrom i_{ref} nicht nur erhöht, sondern auch etwas phasenverschoben ist. Diese Phasenverschiebung ist auch tatsächlich gewollt und führt dazu, dass trotz Einspeisung einer Blindleistung das Hilfssignal AS aber zu einer Wirkleistungsveränderung bei der Entnahme aus dem entsprechenden Teilzwischenkreis führt. Dies ergibt sich dadurch, dass vorgeschlagen wird, dass Hilfssignal in Phase mit der Referenzspannung Uref vorzugeben.

Zur Veranschaulichung ist in Figur 6 noch das kleine Diagramm D4 gezeigt, das den letzten Schritt veranschaulicht, in dem das modifizierte Stromsignal i_{mod} als Basis für das neue Toleranzband verwendet wird. Darauf basierend wird eine obere Toleranzbandgrenze T_{o-mod} und eine untere Toleranzbandgrenze T_{umod} vorgegeben und dadurch wirkt sich das Hilfssignal auf das Toleranzband aus, was durch diese beiden Grenzen bestimmt wird. In der praktischen Umsetzung kann ein Referenzverlauf modifiziert werden und darum kann das Toleranzband bzw. können die Toleranzbandgrenzen gelegt werden, insbesondere mit unveränderter Toleranzbandbreite.

Vorsorglich wird darauf hingewiesen, dass in Figur 6 zur Vereinfachung die Multiplikation des Hilfssignals AS mit der gewichteten Teilzwischenkreisasymmetrie k·Δ, wie in Figur 5 erläutert, weggelassen wurde, für k·Δ wurde quasi der Wert 1 angenommen. Sinkt oder steigt die Teilzwischenkreisasymmetrie ΔU_{DCi}, vergrößert oder verkleinert sich entsprechend das Signal das Anstelle des Hilfssignals AS aufgeschaltet wird. Gleiches gilt, wenn der Gewichtungsfaktor k erhöht oder verringert wird. Auch dann erhöht oder verringert sich das auf den Referenzstrom i_{ref} aufgeschaltete Signal.

## Patentansprüche

1. Verfahren zum Einspeisen elektrischer Leistung in ein elektrisches Netz oder zum Ansteuern einer elektrischen Maschine mittels eines Wechselrichters,
- und der Wechselrichter umfasst mehrere parallelgeschaltete Teilwechselrichter mit jeweils einem Gleichspannungszwischenkreis als Teilzwischenkreis des jeweiligen Teilwechselrichters, wobei
- jeder Teilzwischenkreis eine Teilzwischenkreisspannung aufweist,
- die Teilzwischenkreise zueinander parallelgeschaltet sind,
- jeder Teilwechselrichter mittels eines Toleranzbandverfahrens einen Teileinspeisestrom erzeugt, jeweils mit einem oder mehreren Teilphasenströmen,
- die Teileinspeiseströme der mehreren Teilwechselrichter zu einem Gesamteinspeisestrom addiert werden,
- zum Erzeugen jedes Teilphasenstroms jeweils ein Toleranzband vorgegeben wird, und
- in jedem Teilwechselrichter das Toleranzband jedes Teilphasenstroms in Abhängigkeit von der Teilzwischenkreisspannung dieses Teilwechselrichters vorgegeben wird.

2. Verfahren nach Anspruch 1, **dadurch gekennzeichnet, dass**
- das Toleranzband eines Teilphasenstroms eines Teilwechselrichters in Abhängigkeit von Teilzwischenkreisspannungen anderer, aller anderen oder aller Teilwechselrichter vorgegeben wird.

3. Verfahren nach Anspruch 1 oder 2, **dadurch gekennzeichnet, dass**
- jeweils für einen Teilwechselrichter eine Teilzwischenkreisspannung dieses Teilwechselrichters erfasst und in Relation gesetzt wird zu Teilzwischenkreisspannungen anderer, aller anderen oder aller Teilwechselrichter, um ein Teilzwischenkreisverhältnis für diesen einen Teilwechselrichter zu bestimmen, und
- das Toleranzband eines Teilphasenstroms dieses einen Teilwechselrichters jeweils in Abhängigkeit von dem Teilzwischenkreisverhältnis dieses Teilwechselrichters vorgegeben wird.

4. Verfahren nach einem der vorstehenden Ansprüche, **dadurch gekennzeichnet, dass**
- zum Bestimmen eines bzw. des Teilzwischenkreisverhältnisses eines Teilwechselrichters jeweils die Teilzwischenkreisspannung dieses Teilwechselrichters in Bezug zu einem Mittelwert einiger, aller oder der übrigen Teilzwischenkreisspannungen gesetzt wird, wobei insbesondere
- eine Differenz zwischen der Teilzwischenkreisspannung und dem Mittelwert als Teilzwischenkreisasymmetrie verwendet wird, und
- das Toleranzband jeweils in Abhängigkeit von der Teilzwischenkreisasymmetrie vorgegeben wird.

5. Verfahren nach einem der vorstehenden Ansprüche, **dadurch gekennzeichnet, dass**
- für jeden Teilphasenstrom ein Basistoleranzband in Abhängigkeit von einer vorgesehenen Stromform vorgegeben wird, insbesondere vorgegeben durch ein sinusförmiges Signal nach Frequenz, Phase und Amplitude, und
- das Basistoleranzband in Abhängigkeit von einer Anpassungsgröße verändert wird, um das Toleranzband zum Erzeugen des Teilphasenstroms zu erhalten, wobei
- die Anpassungsgröße des Teilphasenstroms jeweils eines Teilwechselrichters in Abhängigkeit von der Teilzwischenkreisspannung dieses Teilwechselrichters vorgegeben wird und insbesondere
- für die Basistoleranzbänder aller Teilphasenströme jeweils eines Teilwechselrichters eine gemeinsame Korrekturgröße zum Bestimmen, insbesondere Skalieren der Anpassungsgröße vorgegeben wird.

6. Verfahren nach einem der vorstehenden Ansprüche, **dadurch gekennzeichnet, dass**
- eine bzw. die Anpassungsgröße zum Verändern des Basistoleranzbandes in Abhängigkeit von einem vorgebbaren Hilfssignal bestimmt wird, wobei
- das Hilfssignal einen zeitlichen Signalverlauf aufweist, insbesondere einen sinusförmigen Signalverlauf mit gleicher Frequenz wie der Gesamteinspeisestrom, und
- die Anpassungsgröße als Produkt gebildet wird aus wenigstens einem Wert des Hilfssignals und einer bzw. der Teilzwischenkreisasymmetrie, wobei optional
- die Anpassungsgröße als Produkt gebildet wird aus wenigstens einem Wert des Hilfssignals, der Teilzwischenkreisasymmetrie und zusätzlich einem Gewichtungsparameter, zum Gewichten des Veränderns des Basistoleranzbandes.

7. Verfahren nach einem der vorstehenden Ansprüche, **dadurch gekennzeichnet, dass**
- ein bzw. das Hilfssignal zum Bestimmen einer bzw. der Anpassungsgröße als sinusförmiges Signal vorgegeben wird, wobei
- das Hilfssignal insbesondere in Abhängigkeit von einer Referenzspannung und dabei insbesondere mit gleicher Phase wie die Referenzspannung vorgegeben wird, wobei insbesondere
- eine Netzspannung des elektrischen Netzes, in das die elektrische Leistung eingespeist wird, bzw. eine Klemmspannung der elektrischen Maschine, die angesteuert werden soll, die Referenzspannung bildet.

8. Verfahren nach einem der vorstehenden Ansprüche, **dadurch gekennzeichnet, dass**
- jeder Teilphasenstrom jeweils durch eine bzw. die Anpassungsgröße verändert wird oder werden kann, wobei
- die Anpassungsgrößen so gewählt werden, dass eine Änderungssumme als Summe der Anpassungsgrößen der Teilphasenströme jeweils einer Phase über alle Teilwechselrichter null ist, insbesondere so, dass
- die Änderungssumme für jede der Phasen null ist, wobei insbesondere
- eine bzw. die gemeinsame Korrekturgröße zum Skalieren der Anpassungsgrößen jeweils eines Teilwechselrichters jeweils so bestimmt wird, dass eine Summe der gemeinsamen Korrekturgrößen aller Teilwechselrichter null ist.

9. Verfahren nach einem der vorstehenden Ansprüche, **dadurch gekennzeichnet, dass**
- ein bzw. das Hilfssignal zum Bestimmen einer bzw. der Anpassungsgröße so vorgegeben wird, dass
- ein Energieeintrag in den Teilzwischenkreis des jeweiligen Teilwechselrichters maximiert wird, jeweils bezogen auf eine Veränderung eines Effektivwertes des veränderten Teilphasenstroms.

10. Verfahren nach einem der vorstehenden Ansprüche, **dadurch gekennzeichnet, dass**
- die Teilzwischenkreisspannung gemessen oder durch einen Zustandsbeobachter erfasst wird, insbesondere, dass
- zwischen Messen und Beobachten nach einem Auswahlkriterium gewechselt wird.

11. Wechselrichter zum Einspeisen elektrischer Leistung in ein elektrisches Netz oder zum Ansteuern einer elektrischen Maschine, und
- der Wechselrichter umfasst mehrere parallelgeschaltete Teilwechselrichter mit jeweils einem Gleichspannungszwischenkreis als Teilzwischenkreis des jeweiligen Teilwechselrichters, wobei
- jeder Teilzwischenkreis eine Teilzwischenkreisspannung aufweist,
- die Teilzwischenkreise zueinander parallelgeschaltet sind,
- jeder Teilwechselrichter dazu vorbereitet ist, dass er mittels eines Toleranzbandverfahrens einen Teileinspeisestrom erzeugt, jeweils mit einem oder mehreren Teilphasenströmen,
- der Wechselrichter dazu vorbereitet ist, dass
- die Teileinspeiseströme der mehreren Teilwechselrichter zu einem Gesamteinspeisestrom addiert werden,
- zum Erzeugen jedes Teilphasenstroms jeweils ein Toleranzband vorgegeben wird, und
- in jedem Teilwechselrichter das Toleranzband jedes Teilphasenstroms in Abhängigkeit von der Teilzwischenkreisspannung dieses Teilwechselrichters vorgegeben wird.

12. Wechselrichter nach Anspruch 11, **dadurch gekennzeichnet, dass**
- er eine Wechselrichtersteuereinheit aufweist, wobei
- die Wechselrichtersteuereinheit in Kommunikation mit allen Teilwechselrichtern des Wechselrichters steht und ist insbesondere dazu vorbereitet ist,
- Werte der Teilzwischenkreisspannungen aufzunehmen und zu verarbeiten, und/oder
- einen Mittelwert der Teilzwischenkreisspannungen zu bestimmen und/oder
- eine Teilzwischenkreisasymmetrie zu bestimmen und/oder
- die Teilwechselrichter zu koordinieren.

13. Wechseltrichter nach Anspruch 11 oder 12, **dadurch gekennzeichnet, dass**
- der Wechselrichter, insbesondere
- eine bzw. die Wechselrichtersteuereinheit dazu vorbereit ist, wenigsten ein Verfahren nach einem der Ansprüche 1 bis 10 auszuführen.

14. Windenergieanlage mit
- einem Generator zum Erzeugen elektrischer Leistung aus Wind und
- einem Wechselrichter zum Einspeisen der elektrischen Leistung oder eines Teils davon in ein elektrisches Versorgungsnetz, wobei
- ein Wechselrichter nach einem der Ansprüche 11 bis 13 verwendet wird.
